# FASCICULE DE BREVET EUROPEEN

(11) **EP 2 764 410 B1**
(45) Date de publication et mention de la délivrance du brevet: **30.08.2017**
(21) Numéro de dépôt: 12770115.9
(22) Date de dépôt: 02.10.2012
(51) Int. Cl.: G04B 3/04, B29L 31/00, B29C 45/26, B29C 45/34, B29C 33/50, B29K 33/00, B29K 77/00, B29C 45/00, G04B 5/16, G04B 15/14, G04B 39/00, G04B 45/00, G04B 29/02

(54) **FORMAGE DE COMPOSANT D'HORLOGERIE TRANSPARENT MONOBLOC**
FORMUNG EINER DURCHSICHTIGEN MONOBLOCK-UHRENKOMPONENTE
SHAPING OF AN INTEGRAL TRANSPARENT CLOCK COMPONENT

(30) Priorité: 04.10.2011 EP 11183805
(43) Date de publication de la demande: 13.08.2014
(73) Titulaire: ETA SA Manufacture Horlogère Suisse, 2540 Grenchen (CH)
(72) Inventeur: POFFET, Christian, CH-1735 Giffers (CH); GAECHTER, Philipp, CH-4452 Itingen (CH); TINGUELY, Xavier, CH-2046 Fontaines (CH)
(74) Mandataire: Giraud, Eric
(86) Numéro de dépôt international: PCT/EP2012/069473
(87) Numéro de publication internationale: WO 2013/050374

(56) Documents cités:
- EP-A1- 0 320 811
- EP-A1- 0 549 978
- EP-A1- 1 950 021
- WO-A2-2012/025291
- CH-A- 369 407
- JP-A- 58 080 587
- US-A1- 2004 241 049

## Description

### Domaine de l'invention

L'invention concerne un procédé de formage d'un composant d'horlogerie transparent, monobloc et monocouche comportant une surface supérieure et une surface inférieure reliées par un bord, ledit bord s'étendant selon l'épaisseur dudit composant.

L'invention concerne encore l'application de ce procédé à la confection d'un composant d'horlogerie.

### Arrière-plan de l'invention

La substitution de composants transparents d'origine minérale par des composants transparents en matière plastique moulés permet de disposer d'une alternative fonctionnelle à bas coût de production, et toute indépendance de certaines sources d'approvisionnement de matériaux transparents de haut de gamme.

Toutefois, les pièces transparentes moulées sont, d'une part relativement épaisses car il est délicat de mouler des pièces très fines dans une qualité convenable et reproductible. D'autre part, la résistance à l'usure, et particulièrement aux rayures, de ces composants en plastique connus, est très médiocre. Leur utilisation pour des composants d'habillage d'une pièce d'horlogerie, carrure, lunette, ou glace, est donc limitée dans le temps.

Cette faible résistance à l'usure empêche, encore, de réaliser des composants avec des angles vifs, qui s'émousseraient trop vite dans le temps au contact de l'utilisateur, de ses vêtements, et des objets de son cadre de vie habituel.

Le document EP 0 320 811 A1 au nom de ETA décrit un procédé de réalisation d'un moule solide pour pièces de très petites dimensions, avec des coquilles issues d'ébauches pulvérulentes transformées par frittage.

Le document JP 58 080587 A au nom de SUWA SEIKOSHA décrit l'amélioration de boîtes de montres, en terme de résistance et de précision dimensionnelle, par l'utilisation de fibre de verre traitée avec du silane acrylique et mélangée avec une résine synthétique durcissant aux UV, telle que résine spirane, avec un agent amorceur de la photo-polymérisation tel que benzophénone. Ces boîtes sont moulées dans des moules en caoutchouc synthétique élastique ou silicone, qui sont fixés à des plaques de verre puis irradiés par des UV pendant 30 secondes à 30 minutes selon l'intensité du rayonnement.

Le document CH 369 407 A au nom de LONZA décrit l'utilisation d'un mélange de polyméthylméthacrylate et de poly-glycol-diméthacrylate pour fabriquer des glaces de montres ou des verres optiques.

Le document EP 0 549 978 A1 au nom de ETA décrit un procédé d'assemblage d'une glace sur une boîte de montre en matière thermoplastique thermo-soudable, avec un indexage mécanique entre cette glace et cette boîte.

Le document US 2004/0241049 A1 au nom de Bruce CARVALHO décrit l'utilisation d'outils élastomères flexibles pour produire des composants thermoplastiques.

Le document WO 2012/025291 A2 au nom de ETA SA décrit l'utilisation de polymères à base de silicium pour la réalisation de céramiques amorphes par traitement de pyrolyse.

### Résumé de l'invention

L'invention se propose de mettre en oeuvre un procédé permettant l'obtention économique, avec une haute précision dimensionnelle, de composants d'horlogerie transparents et monobloc.

Tout particulièrement, l'invention a pour but de réaliser un tel composant, avec une dureté superficielle supérieure à celle des composants d'horlogerie usuellement obtenus par moulage de matériaux plastiques.

Un but particulier est encore de réaliser des composants externes à une pièce d'horlogerie, comportant des angles vifs, par exemple avec une taille à facettes ou une taille diamant, et résistants à l'usure.

A cet effet, l'invention concerne un procédé de formage d'un composant d'horlogerie transparent, monobloc et monocouche comportant une surface supérieure et une surface inférieure reliées par un bord , ledit bord s'étendant selon l'épaisseur dudit composant, caractérisé en ce que :
- on choisit, un premier matériau de moulage transparent et polymérisable pour la réalisation dudit composant, ledit premier matériau comportant, en proportion du total :
   ∘ un mélange de trimethylolpropane tri (méthacrylate) et de pentaerythrityl tetraacrylate : 50-97.5%
   ∘ bis (4-tert-butylcyclohexyl) peroxydicarbonate : 0.5-1.5%
   ∘ 1-benzoylcyclohexanol : 0.7-2.3%
   ∘ au moins un additif:0-50%;
- on choisit le polyméthylsiloxane, comme second matériau de moulage, pour réaliser un moule souple pour le moulage dudit premier matériau de moulage et pour autoriser son démoulage ;
- on réalise une plaque dont une surface de contact est le négatif de ladite surface supérieure ;
- on réalise un moule femelle souple dans ledit second matériau de moulage, ledit moule femelle comportant :
- une première surface de contact constituant un moule femelle de ladite surface inférieure;
- autour de ladite première surface de contact, un rebord comportant une première surface d'appui agencée pour coopérer de façon complémentaire avec ladite surface de contact de ladite plaque ;
- et une deuxième surface d'appui opposée à ladite première surface;
- on réalise dans ledit moule femelle un réseau capillaire d'injection et de dégazage;
- on applique ladite deuxième surface d'appui dudit moule femelle sur une plaque support ;
- on positionne, à une distance de ladite première surface correspondant à l'épaisseur requise pour ledit composant, et exactement positionnée par rapport à ladite première surface, ladite plaque avec sa dite surface de contact faisant face à ladite première surface de contact dudit moule femelle, avec ladite première surface d'appui en contact étanche avec ladite surface de contact de ladite plaque;
- on injecte au travers dudit réseau capillaire d'injection ledit premier matériau de moulage, de façon à remplir entièrement dudit premier matériau de moulage une cavité délimitée par ladite surface de contact de ladite plaque ladite première surface de contact dudit moule femelle et ledit rebord en appui étanche par sa dite première surface d'appui sur ladite surface de contact;
- on laisse se polymériser ledit premier matériau injecté dans ladite cavité jusqu'à l'obtention d'un dit composant rigide;
- on éloigne ladite plaque et ladite plaque support ;
- on détache ledit composant dudit moule femelle souple par déformation de ce dernier.

Selon une caractéristique de l'invention, on choisit ledit premier matériau dans une composition-type où ledit premier matériau comporte, en proportion du total :
- trimethylolpropane tri (méthacrylate) : 78.0 %
- pentaerythrityl tetraacrylate : 19.5%
- bis (4-tert-butylcyclohexyl) peroxydicarbonate : 0.5%
- 1-benzoylcyclohexanol : 2.0%.

Selon une autre caractéristique de l'invention, on soumet ledit premier matériau injecté dans ladite cavité, pendant sa polymérisation, à une température comprise entre 100 °C et 120°C, pendant 10 à 20 secondes.

Selon une autre caractéristique de l'invention, on réalise ladite plaque transparente aux rayons ultra-violets, et, après injection dudit premier matériau de moulage, on insole ledit composant par un rayonnement ultra-violet, ou bien au travers de ladite plaque transparente, ou bien après extraction dudit composant polymérisé de ladite cavité, pour obtenir une dureté améliorée dudit composant rigide.

Selon une autre caractéristique de l'invention, on choisit ledit second matériau de moulage transparent aux rayons ultra-violets de façon à obtenir un dit moule femelle souple transparent aux rayons ultra-violets, et on choisit ladite plaque support transparente aux rayons ultra-violets, de façon à insoler par un rayonnement ultra-violet, en plus de ladite insolation au travers de ladite plaque transparente, ledit premier matériau injecté dans ladite cavité, au travers de ladite plaque support et dudit moule femelle souple, pour obtenir une dureté améliorée dudit composant rigide.

Selon une autre caractéristique de l'invention, on applique une force de serrage sur ladite plaque et sur ladite plaque d'appui pendant l'injection dudit premier matériau de moulage dans ladite cavité, et pendant la polymérisation dudit premier matériau de moulage pour la réalisation dudit composant.

L'invention concerne encore l'application de ce procédé à la confection d'un composant d'horlogerie choisi parmi : glace, couronne, carrure, platine, pont, roue, roue d'échappement, ancre, masse oscillante.

### Description sommaire des dessins

D'autres caractéristiques et avantages de l'invention apparaîtront mieux à la lecture de la description détaillée qui va suivre, en référence aux dessins annexés, où :
- la figure 1 représente, de façon schématisée sous forme d'un organigramme, la succession des opérations de mise en oeuvre du procédé ;
- la figure 2 représente, de façon schématisée et en coupe selon l'épaisseur du composant à former et sensiblement perpendiculairement à ses surfaces principales, les outillages de réalisation dans leur configuration pendant le formage du composant, dans une première variante sans insolation au travers de ces outillages ;
- la figure 3 représente, de façon similaire à la figure 2, une deuxième variante où le composant est insolé au travers d'un des outillages ;
- la figure 4 représente, de façon similaire à la figure 2, une troisième variante où le composant est insolé au travers de plusieurs des outillages ;
- la figure 5 représente, sous la forme d'un schéma-blocs, une pièce d'horlogerie comportant au moins un composant réalisé selon l'invention ;
- la figure 6 représente une coupe au voisinage de la surface supérieure d'un composant réalisé selon une variante particulière de l'invention.

### Description détaillée des modes de réalisation préférés

L'invention concerne un procédé de formage d'un composant d'horlogerie 1 transparent, comportant des surfaces supérieure 2 et inférieure 3, reliées par un bord 4, le bord 4 s'étendant selon l'épaisseur du composant 1.

La première étape de ce procédé consiste dans le choix d'un premier matériau 5 de moulage.

Ce premier matériau 5 comporte, en proportion du total :
- un mélange de trimethylolpropane tri (méthacrylate) et de pentaerythrityl tetraacrylate : 50-97.5%
- bis (4-tert-butylcyclohexyl) peroxydicarbonate : 0.5-1.5%
- 1-benzoylcyclohexanol : 0.7-2.3%
- au moins un additif:0-50%

Dans une composition préférée, qu'on appellera dans la suite de l'exposé la composition-type CT du premier matériau 5, ce premier matériau 5 comporte, en proportion du total :
- trimethylolpropane tri (méthacrylate) : 78.0 %
- pentaerythrityl tetraacrylate : 19.5%
- bis (4-tert-butylcyclohexyl) peroxydicarbonate : 0.5%
- 1-benzoylcyclohexanol : 2.0%

En ce qui concerne celles des compositions du premier matériau 5 qui comportent des additifs, lesquels sont dans une plage de 0-50% du total de ce premier matériau 5, ces additifs peuvent comporter, en pourcentage du total de ce premier matériau :
a. Antistatiques :
   a. Copolymère polyamide-polyéther : 0-15% préférentiellement de 10-15%
   b. Résine ionomère éthylénique : 0-30% préférentiellement de 10-30%
   c. Trineoalkoxy Zirconate : 0-30% préférentiellement de 10-30%
b. Conducteurs :
   a. Nanoparticules conductrices : or, nanotubes de carbone, argent, alliage oxyde d'antimoine et d'étain, alliage oxyde d'aluminium et de zinc, alliage oxyde d'indium et d'étain, alliage oxyde de gallium et de zinc: 0-30% préférentiellement de 10-30%
c. Magnétiques :
   a. Nanoparticules magnétiques : magnétite : 0-30% préférentiellement de 5-30%
d. Antibactériens
   a. Ions argent : 0-30% préférentiellement de 10-30%
e. Anti-UV :
   a. Absorbeurs : benzotriazole : 0-0.2% préférentiellement de 0.05-0.2%
   b. HALS (Hindered Amine Light Stabilizers) :0-0.2% préférentiellement de 0.05-0.2%
f. Antioxydants :
   a. Phosphite phénolique ; éthylène bis [3,3-bis(3-tert-butyl-4-hydroxyphenyl) butyrate] ; pentaerythritol tetrakis (3-(3,5-di-tert-butyl-4-hydroxyphenyl) propionate) : 0-1.5%
g. Ignifugeants :
   a. Dérivé du phosphore : triphenyl phosphate 0-15%
   b. Montmorillonite exfoliée : 0-15%
   c. Nanotubes d'argiles : 0-15%
h. Lubrifiants :
   a. Silicone acrylate : 0-2% préférentiellement de 0.5-2%
i. Colorants :
   a. Anthraquinoniques : 0-50%
   b. Azoïques : 0-50%
j. Pigments : 0-50%
k. Adjuvant à « relargage » contrôlé : incorporés dans la formulation, ces adjuvants sont progressivement libérés dans le milieu d'utilisation : 0-50%
l. Microcapsules d'agent réparateur, constituées de liquide polymérisable de même nature que la composition concernée, en particulier dans une composition-type CT, sa teneur étant alors intégrée dans la teneur totale : 0-50%

Pour mettre en oeuvre ce procédé, on réalise les étapes suivantes :
- A. on choisit un matériau 5 transparent et polymérisable pour la réalisation du composant 1, de préférence selon la composition-type CT ou le matériau «Cover Form ® » de « Evonik ® »; on peut encore choisir ce premier matériau de moulage 5 transparent et polymérisable pour la réalisation du composant 1, parmi la famille des polymères acryliques ou le « Nanocryl® » de « Hanse Chemie® »;
- B : on réalise un moule femelle souple 9, dont une surface de contact 10 est le négatif de la surface inférieure 3, bordée par un rebord 11, ce moule 9 comportant un réseau capillaire 14;
- C :on applique sur une plaque support 15 ce moule femelle souple 9, dont une surface de contact 10 est le négatif de la surface inférieure 3, bordée par un rebord 11, ce moule 9 comportant un réseau capillaire 14;
- D : on délimite une cavité 17 par juxtaposition étanche du rebord 11 avec une plaque 6 dont une surface de contact 7 est le négatif de la surface supérieure 2,
- E : on injecte au travers du réseau capillaire 14 le matériau 5, pour remplir la cavité 17;
- F : on y polymérise le matériau 5 pour l'obtention d'un composant 1 rigide;
- G : on détache le composant 1 des plaques et du moule souple 9 par déformation de ce dernier.

On améliore la dureté par une insolation du composant 1 aux UV. La mise en oeuvre préférée de l'invention comporte cette insolation UV, qui permet à l'amorceur photochimique de s'activer afin de réagir ; à défaut, les propriétés mécaniques du composant 1 fini sont moins bonnes.

De préférence, pour la mise en oeuvre de l'invention, ou bien on choisit le premier matériau 5 dans la composition-type CT qui comporte, en proportion du total :
- trimethylolpropane tri (méthacrylate) : 78.0 %
- pentaerythrityl tetraacrylate : 19.5%
- bis (4-tert-butylcyclohexyl) peroxydicarbonate : 0.5%
- 1-benzoylcyclohexanol : 2.0%,
ou bien on choisit le matériau « Cover Form ® » de « Evonik Röhm ® » comme premier matériau de moulage 5 polymérisable pour la réalisation du composant 1. Ce matériau est issu de la combinaison de deux composants : un réactif liquide de référence « 30A »et un amorceur liquide de référence « 30B ».

Ce mode opératoire va être détaillé ci-après.

De préférence, pour réaliser un moule femelle 9 très précis, on réalise un modèle de précision correspondant au profil mâle de la surface inférieure 3 dans un matériau tel que le « SU8® » ou similaire, et on réalise avec ce modèle de précision un moule femelle souple 9 dans le second matériau de moulage 8. On choisit ce second matériau de moulage 8, pour réaliser un moule souple pour le moulage du premier matériau de moulage 5 et pour autoriser son démoulage, parmi le « PDMS® » ou le polyméthylsiloxane.

Le moule femelle 9 comporte de préférence :
- une première surface de contact 10 constituant un moule femelle de la surface inférieure 3 ;
- autour de la première surface de contact 10, un rebord 11 comportant une première surface d'appui 12 agencée pour coopérer de façon complémentaire avec la surface de contact 7 de la plaque 6;
- et une deuxième surface d'appui 13 opposée à la première surface 10.

On réalise dans le moule femelle 9 un réseau capillaire 14 d'injection et de dégazage;

On applique de préférence la deuxième surface d'appui 13 du moule femelle 9 sur une plaque support 15. Pour faciliter l'automatisation, cette plaque support 15 est de préférence rigide. Quand elle est choisie transparente dans une version avantageuse de l'invention, elle peut être réalisée en verre ou similaire.

On réalise une plaque 6 dont une surface de contact 7 est le négatif de la surface supérieure 2 ; cette plaque 6 est formée d'un matériau facilitant la séparation du composant 1 une fois polymérisé. Pour faciliter l'automatisation du procédé, cette plaque 6 est avantageusement rigide. Quand elle est choisie transparente dans une version avantageuse de l'invention, elle peut être réalisée en verre ou similaire. Naturellement, elle peut aussi être réalisée dans le même second matériau de moulage 8, et être alors rapportée sur une plaque support non représentée sur les figures.

On positionne, à une distance de la première surface 10 correspondant à l'épaisseur requise pour le composant 1, et exactement positionnée par rapport à la première surface 10, à l'aide de centrages, locatings ou similaires, la plaque 6 avec sa surface de contact 7 faisant face à la première surface de contact 10 du moule femelle 9, avec la première surface d'appui 12 en contact étanche avec la surface de contact 7 de la plaque 6.

On injecte au travers du réseau capillaire d'injection 14 le premier matériau de moulage 5, de façon à remplir entièrement du premier matériau de moulage 5 une cavité 17 délimitée par la surface de contact 7 de la plaque 6, la première surface de contact 10 du moule femelle 9 et le rebord 11 en appui étanche par sa première surface d'appui 12 sur la surface de contact 7. On veille à dégazer complètement la cavité 17, de façon à ce qu'aucune bulle d'air ne subsiste.

On laisse se polymériser le premier matériau 5 injecté dans la cavité 17 jusqu'à l'obtention d'un composant 1 rigide. Cette polymérisation naturelle peut s'accompagner d'un chauffage H, ou/et d'une insolation J aux rayons ultra-violets dits ci-après UV, qui ont chacun pour effet d'augmenter la durée superficielle du composant 1 obtenu, en effectuant la réticulation définitive du système. L'insolation apporte un supplément de dureté notable, d'environ 10%, par rapport au même composant polymérisé à l'ambiante, soit polymérisé avec chauffage, et, dans ce dernier cas, d'une dureté superficielle déjà supérieure à celle du même composant polymérisé à l'ambiante.

Après polymérisation, on éloigne la plaque 6 et la plaque support 15. On comprend qu'il est possible d'effectuer un chauffage complémentaire ou/et une insolation aussi bien quand le composant 1 est enfermé dans la cavité 17 définie par les outillages, que quand il en est extrait. La durée d'un cycle d'injection et de polymérisation avec chauffage est brève, de l'ordre de 30 à 40 secondes. Le cycle d'insolation a une durée de 10 à 20 secondes.

Dans une réalisation préférée, on fait une chauffe de polymérisation quand le composant 1 est encore dans l'outillage, le choix de l'insolation en ou hors outillage dépend essentiellement des contraintes de cycle de production : dans un cas les outillages sont immobilisés un peu plus longtemps avant le formage du composant suivant, dans l'autre cas une manipulation annexe est requise. Dans ce cas, on soumet le premier matériau 5 injecté dans la cavité 17, pendant sa polymérisation, à une température inférieure à 150°C, voisine de 110°C, notamment comprise entre 100°C et 120°C, pendant 10 à 20 secondes.

Dans une variante avantageuse, on réalise un refroidissement à température ambiante au moins aussi brusque que la chauffe, pendant une durée inférieure à 20 secondes.

On détache facilement le composant 1 du moule femelle souple 9 par simple déformation de ce dernier.

De façon avantageuse, pour améliorer encore la dureté superficielle du composant 1 obtenu par la mise en oeuvre du procédé, on procède à son insolation par un rayonnement ultra-violet.

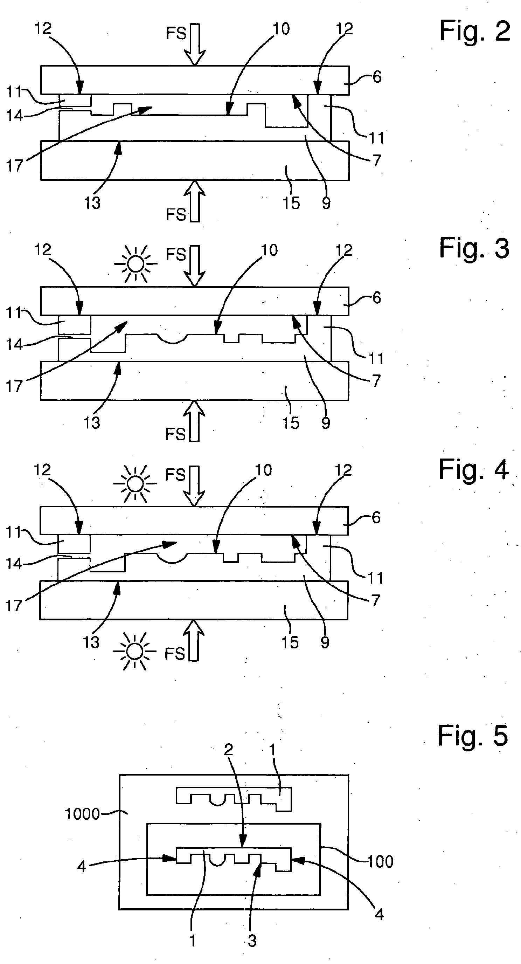

A cet effet, dans une deuxième variante, tel que visible sur la figure 3:
- on réalise la plaque 6 transparente aux rayons ultra-violets ;
- après injection du premier matériau de moulage 5, on insole le composant 1 par un rayonnement ultra-violet, ou bien au travers de la plaque transparente 6, ou bien après extraction du composant 1 polymérisé de la cavité 17, pour obtenir une dureté améliorée du composant 1 rigide.

De façon similaire et avantageuse, pour améliorer encore la dureté superficielle du composant 1 obtenu par la mise en oeuvre du procédé, on procède à son insolation sur toutes ses faces par un rayonnement ultra-violet.

A cet effet, dans une troisième variante, tel que visible sur la figure 4:
- on choisit le second matériau de moulage 8 transparent aux rayons ultra-violets de façon à obtenir un moule femelle souple 9 transparent aux rayons ultra-violets, et on choisit la plaque support 15 transparente aux rayons ultra-violets, de façon à insoler le composant 1 par un rayonnement ultra-violet, en plus de la insolation au travers de la plaque transparente 6, le premier matériau 5 injecté dans la cavité 17, au travers de la plaque support 15 et du moule femelle souple 9, pour obtenir une dureté améliorée du composant 1 rigide.

Avec les choix de matériaux proposés ici, compte tenu des propriétés de grande fluidité, à l'état non polymérisé, du premier matériau 5 selon la composition-type CT ou du produit « Cover Form ® », il n'est pas nécessaire de procéder à une injection à haute pression, car la mouillabilité de ce matériau est suffisante pour lui permettre d'occuper parfaitement et précisément la totalité de la cavité 17, à condition bien entendu que le réseau capillaire 14 soit bien réalisé de façon à assurer un dégazage complet et l'absence de toute bulle d'air. On peut ainsi effectuer l'injection du premier matériau de moulage 5 à une pression inférieure à 150 MPa, et en particulier à basse pression, notamment inférieure à 10 MPa.

Dans une variante avantageuse de mise en oeuvre de l'invention, on applique une force de serrage FS sur la plaque 6 et sur la plaque d'appui 15 pendant l'injection du premier matériau de moulage 5 dans la cavité 17, et pendant la polymérisation du premier matériau de moulage 5 pour la réalisation du composant 1.

Dans une exécution particulière, quand le composant 1 comporte une surface supérieure 2 plane, on réalise la plaque 6 avec au moins sa surface de contact 7 plane, et on réalise le moule femelle souple 9 avec son rebord 11 comportant une première surface d'appui 12 plane.

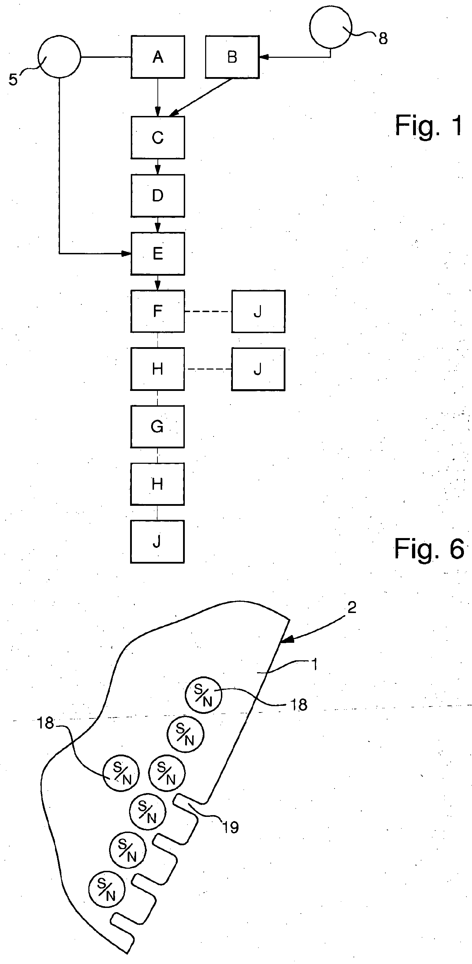

La figure 6 illustre une réalisation particulière, dans laquelle on insère dans la cavité 17 formant moule, soit avant l'injection du premier matériau de moulage 5, soit pendant ou après cette injection, des nodules 18 comportant chacun un noyau électrisable ou/et magnétisable ou/et électrisé ou/et magnétisé, notamment de type électrets, ferrites, aimants néodyme, ou similaires. L'électrisation ou l'aimantation peut être préalable ou postérieure à l'injection. La figure 6 illustre par exemple des particules aimantées après la polymérisation complète du premier matériau de moulage 5, notamment du premier matériau 5 selon la composition-type CT ou du produit «Cover Form ® ». Cette figure 6 illustre aussi, dans une zone de la surface supérieure 2, des alvéoles 19 agencées pour la lubrification. La surface de contact 7 de la plaque 6 est alors aménagée en conséquence.

Dans une autre variante, un matériau lubrifiant est mélangé au premier matériau de moulage 5, de façon analogue aux nodules 18 ci-dessus.

L'invention concerne encore l'application de ce procédé à la confection d'un composant d'horlogerie 1 choisi parmi : glace, couronne, carrure, platine, pont, roue, roue d'échappement, ancre, roue, masse oscillante, logement de palier, amortisseur anti-choc, cette liste n'étant nullement limitative.

Le choix du premier matériau 5 est déterminant pour la tenue du composant 1 considéré. En effet, certains matériaux sont conçus spécifiquement pour des recouvrements de surface, d'épaisseur inférieure à 50 µm leur application pour la réalisation complète de composants horlogers n'est pas toujours possible. Le choix préféré d'utilisation du premier matériau 5 selon la composition-type CT ou du produit «Cover Form ® » dans une plage d'épaisseur qui peut être beaucoup plus importante, notamment de plusieurs millimètres pour des glaces de montre, ne va pas de soi, et est consécutif à une longue campagne d'essais. Naturellement le retrait est conséquent dans de telles épaisseurs, et les moules correspondants doivent être dimensionnés en conséquence.

Un mouvement d'horlogerie 100 peut comporter au moins un composant 1 réalisé selon ce procédé.

Une pièce d'horlogerie 1000 peut comporter au moins un composant 1 réalisé selon ce procédé, ou au moins un tel mouvement 100 réalisé selon l'une des revendications 1 à 9.

Dans une réalisation particulière, cette pièce d'horlogerie 1000 est une pièce d'horlogerie dite mystérieuse comportant au moins une platine réalisée selon ce procédé.

Dans une autre réalisation particulière, cette pièce d'horlogerie 1000 comporte une lunette à facettes en taille de joaillerie réalisée selon ce procédé.

L'invention permet d'obtenir des composants d'une grande transparence, d'une dureté superficielle supérieure à celle des matières plastiques moulées usuelles, de dureté durable. Le comportement aux rayures est très bon. En utilisant comme premier matériau de moulage 5 du premier matériau 5 selon la composition-type CT ou du produit «Cover Form ® », avec une chauffe inférieure à 130°C et un durcissement UV, on obtient une dureté, qui, classée sur l'échelle des mines graphites d'écriture est au niveau 7H, à comparer avec une dureté 2H d'un PMMA standard ayant reçu un traitement anti-rayures, ou encore avec une dureté HB d'un polyamide.

Le composant ainsi réalisé n'est pas rayable par la laine de verre.

Avec l'emploi de moules de qualité de réalisation soignée, le polissage du composant après fabrication n'est pas nécessaire.

## Revendications

1. Procédé de formage d'un composant d'horlogerie (1) transparent, monobloc et monocouche comportant une surface supérieure (2) et une surface inférieure (3) reliées par un bord (4), ledit bord (4) s'étendant selon l'épaisseur dudit composant (1), **caractérisé en ce que** :
- on choisit, un premier matériau de moulage (5) transparent et polymérisable pour la réalisation dudit composant (1), ledit premier matériau (5) comportant, en proportion du total :
∘ un mélange de trimethylolpropane tri (méthacrylate) et de pentaerythrityl tetraacrylate : 50-97.5%
∘ bis (4-tert-butylcyclohexyl) peroxydicarbonate : 0.5-1.5%
∘ 1-tienzoylcyclohexanol : 0.7-2.3%
∘ au moins un additif:0-50%;
- on choisit le polyméthylsiloxane comme second matériau de moulage (8), pour réaliser un moule souple pour le moulage dudit premier matériau de moulage (5) et pour autoriser son démoulage ;
- on réalise une plaque (6) dont une surface de contact (7) est le négatif de ladite surface supérieure (2) ;
- on réalise un moule femelle souple (9) dans ledit second matériau de moulage (8), ledit moule femelle (9) comportant :
- une première surface de contact (10) constituant un moule femelle de ladite surface inférieure (3) ;
- autour de ladite première surface de contact (10), un rebord (11) comportant une première surface d'appui (12) agencée pour coopérer de façon complémentaire avec ladite surface de contact (7) de ladite plaque (6);
- et une deuxième surface d'appui (13) opposée à ladite première surface (10) ;
- on réalise dans ledit moule femelle (9) un réseau capillaire (14) d'injection et de dégazage;
- on applique ladite deuxième surface d'appui (13) dudit moule femelle (9) sur une plaque support (15) ;
- on positionne, à une distance de ladite première surface (10) correspondant à l'épaisseur requise pour ledit composant (1), et exactement positionnée par rapport à ladite première surface (10), ladite plaque (6) avec sa dite surface de contact (7) faisant face à ladite première surface de contact (10) dudit moule femelle (9), avec ladite première surface d'appui (12) en contact étanche avec ladite surface de contact (7) de ladite plaque (6);
- on injecte au travers dudit réseau capillaire d'injection (14) ledit premier matériau de moulage (5), de façon à remplir entièrement dudit premier matériau de moulage (5) une cavité (17) délimitée par ladite surface de contact (7) de ladite plaque (6), ladite première surface de contact (10) dudit moule femelle (9) et ledit rebord (11) en appui étanche par sa dite première surface d'appui (12) sur ladite surface de contact (7) ;
- on laisse se polymériser ledit premier matériau (5) injecté dans ladite cavité (17) jusqu'à l'obtention d'un dit composant (1) rigide;
- on éloigne ladite plaque (6) et ladite plaque support (15) ;
- on détache ledit composant (1) dudit moule femelle souple (9) par déformation de ce dernier.

2. Procédé de formage d'un composant d'horlogerie (1) selon la revendication 1, **caractérisé en ce que** on choisit, pour ledit au moins un additif, au moins un des produits listés ci-après, dans la teneur indiquée, en pourcentage du total dudit premier matériau,:
- Copolymère polyamide-polyéther : 10-15%
- Résine ionomère éthylénique : 10-30%
- Trineoalkoxy Zirconate : 10-30%
- Nanoparticules conductrices : or, nanotubes de carbone, argent, alliage oxyde d'antimoine et d'étain, alliage oxyde d'aluminium et de zinc, alliage oxyde d'indium et d'étain, alliage oxyde de gallium et de zinc: 10-30%
- Nanoparticules magnétiques ou magnétite : 5-30%
- Ions argent : 10-30%
- benzotriazole : 0.05-0.2%
- HALS (Hindered Amine Light Stabilizers) : 0.05-0.2%
- Phosphite phénolique ; éthylène bis [3,3-bis(3-tert-butyl-4-hydroxyphenyl) butyrate] ; pentaerythritol tetrakis (3-(3,5-di-tert-butyl-4-hydroxyphenyl) propionate) : 0-1.5%
- triphenyl phosphate 0-15%
- Montmorillonite exfoliée : 0-15%
- Nanotubes d'argiles : 0-15%
- Silicone acrylate : de 0.5-2%
- Anthraquinoniques : 0-50%
- Azoïques : 0-50%
- Pigments : 0-50%
- Adjuvant à relargage contrôlé : incorporés dans la formulation, lesdits adjuvants sont progressivement libérés dans le milieu d'utilisation : 0-50%
- Microcapsules d'agent réparateur, constituées de liquide polymérisable de même nature que la composition concernée, sa teneur étant alors intégrée dans la teneur totale : 0-50%

3. Procédé de formage d'un composant d'horlogerie (1) selon la revendication 1, **caractérisé en ce qu'**on choisit ledit premier matériau (5) dans une composition-type (CT) où ledit premier matériau (5) comporte, en proportion du total :
- trimethylolpropane tri (méthacrylate) : 78.0 %
- pentaerythrityl tetraacrylate : 19.5%
- bis (4-tert-butylcyclohexyl) peroxydicarbonate : 0.5%
- 1-benzoylcyclohexanol : 2.0%,
comme dit premier matériau de moulage (5) polymérisable pour la réalisation dudit composant (1).

4. Procédé de formage d'un composant d'horlogerie (1) selon l'une des revendications 1 à 3, **caractérisé en ce que** on soumet ledit premier matériau (5) injecté dans ladite cavité (17), pendant sa polymérisation, à une température comprise entre 100°C et 120°C, pendant 10 à 20 secondes.

5. Procédé de formage d'un composant d'horlogerie (1) selon l'une des revendications précédentes, **caractérisé en ce que**, après injection dudit premier matériau de moulage (5), on insole ledit composant (1) par un rayonnement ultra-violet, ou bien au travers de ladite plaque (6) réalisée sous forme d'une plaque transparente aux rayons ultra-violets, ou bien après extraction dudit composant (1) polymérisé de ladite cavité (17), pour obtenir une dureté améliorée dudit composant (1) rigide.

6. Procédé de formage d'un composant d'horlogerie (1) selon la revendication précédente, **caractérisé en ce qu'**on choisit ledit second matériau de moulage (8) transparent aux rayons ultra-violets de façon à obtenir un dit moule femelle souple (9) transparent aux rayons ultra-violets, et **en ce qu'**on choisit ladite plaque support (15) transparente aux rayons ultra-violets, de façon à insoler ledit composant (1) par un rayonnement ultra-violet, en plus de ladite insolation au travers de ladite plaque transparente (6), ledit premier matériau (5) injecté dans ladite cavité (17), au travers de ladite plaque support (15) et dudit moule femelle souple (9), pour obtenir une dureté améliorée dudit composant (1) rigide.

7. Procédé de formage d'un composant d'horlogerie (1) selon l'une des revendications précédentes, **caractérisé en ce qu'**on applique une force de serrage sur ladite plaque (6) et sur ladite plaque d'appui (15) pendant l'injection dudit premier matériau de moulage (5) dans ladite cavité (17), et pendant la polymérisation dudit premier matériau de moulage (5) pour la réalisation dudit composant (1).

8. Procédé de formage d'un composant d'horlogerie (1) selon l'une des revendications précédentes, **caractérisé en ce qu'**on réalise ledit composant (1) avec ladite surface supérieure (2) plane, et qu'on réalise ladite plaque (6) avec au moins sa dite surface de contact (7) plane, et **en ce qu'**on réalise ledit moule femelle souple (9) avec son dit rebord (11) comportant une première surface d'appui (12) plane.

9. Procédé de formage d'un composant d'horlogerie (1) selon l'une des revendications précédentes, **caractérisé en ce qu'**on on insère dans ladite cavité (17), soit avant l'injection du premier matériau de moulage (5), soit pendant ou après cette injection, des nodules (18) comportant chacun un noyau électrisable ou/et magnétisable ou/et électrisé ou/et magnétisé, l'électrisation ou l'aimantation étant préalable ou postérieure à l'injection.

10. Application du procédé selon l'une des revendications précédentes à la confection d'un composant d'horlogerie (1) choisi parmi: glace, couronne, carrure, platine, pont, roue, roue d'échappement, ancre, masse oscillante, logement de palier, amortisseur anti-choc.

## Patentansprüche

1. Verfahren zum Bilden einer lichtdurchlässigen Monoblock- und Einzelschicht-Uhrenkomponente (1), die eine obere Oberfläche (2) und eine untere Oberfläche (3) aufweist, die durch einen Rand (4) verbunden sind, wobei sich der Rand (4) in Dickenrichtung der Komponente (1) erstreckt, **gekennzeichnet durch**:
- Wählen eines ersten lichtdurchlässigen und polymerisierbaren Gießmaterials (5) für die Herstellung der Komponente (1), wobei das erste Material (5) bezogen auf die Gesamtheit enthält:
• ein Gemisch aus Trimethylolpropan-Tri(methacrylat) und aus Pentaerythrityl-Tetraacrylat: 50-97,5 %
• Bis(4-tert-butylcyclohexyl)peroxydicarbonat: 0,5-1,5 %,
• 1-Benzoylcyclohexanol: 0,7-2,3 %,
• mindestens einen Zusatzstoff: 0-50 %;
- Wählen von Polymethylsiloxan als zweites Gießmaterial (8), um eine nachgiebige Form zum Gießen des ersten Gießmaterials (5) herzustellen und um seine Entnahme aus der Form zuzulassen;
- Herstellen einer Platte (6), deren Kontaktoberfläche (7) das Negativ der oberen Oberfläche (2) ist;
- Herstellen einer nachgiebigen Hohlgießform (9) aus dem zweiten Gießmaterial (8), wobei die Hohlgießform (9) Folgendes umfasst:
- eine erste Kontaktoberfläche (10), die eine Hohlgießform der unteren Oberfläche (3) bildet;
- um die erste Kontaktoberfläche (10) eine Kante (11), die eine erste Abstützoberfläche (12) aufweist, die dafür ausgelegt ist, mit der Kontaktoberfläche (7) der Platte (6) auf komplementäre Weise zusammenzuwirken;
- und eine zweite Abstützoberfläche (13) gegenüber der ersten Oberfläche;
- Ausbilden eines Kapillarnetzes (14) in der Hohlgießform (9) zum Einspritzen und Entgasen;
- Aufbringen der zweiten Abstützoberfläche (13) der Hohlgießform (9) auf eine Tragplatte (15);
- Positionieren der Platte (6) in einem Abstand von der ersten Oberfläche (10), der der geforderten Dicke für die Komponente (1) entspricht, und exakt positioniert in Bezug auf die erste Oberfläche (10), wobei ihre Kontaktoberfläche (7) der ersten Kontaktoberfläche (10) der Hohlgießform (9) gegenüber liegt, wobei die erste Abstützoberfläche (12) mit der Kontaktoberfläche (7) der Platte (6) in abdichtendem Kontakt ist;
- Einspritzen durch das Einspritzkapillarnetz (14) des ersten Gießmaterials (5), derart, dass ein Hohlraum (17), der durch die Kontaktoberfläche (7) der Platte (6) begrenzt ist, mit dem ersten Gießmaterial (5) vollständig gefüllt wird, wobei sich die erste Kontaktoberfläche (10) der Hohlgießform (9) und die Kante (11) mit ihrer ersten Abstützoberfläche (12) auf der Kontaktoberfläche (7) dicht abstützen;
- Polymerisierenlassen des in den Hohlraum (17) eingespritzten ersten Materials (5), bis eine starre Komponente (1) erhalten wird;
- Entfernen der Platte (6) und der Trägerplatte (15);
- Entnehmen der Komponente (1) aus der nachgiebigen Hohlgießform (9) durch Verformen dieser Letzteren.

2. Verfahren zum Formen einer Uhrenkomponente (1) nach Anspruch 1, **dadurch gekennzeichnet, dass** für den mindestens einen Zusatzstoff mindestens eines der im Folgenden angegebenen Erzeugnisse mit ihrem angegebenen Gehalt bezogen auf die Gesamtheit des ersten Materials gewählt wird:
- Polyamid-Polyether-Copolymer: 10-15 %,
- ionomeres Ethylenharz: 10-30 %,
- Trineoalkoxy-Zirkonat: 10-30 %,
- leitende Nanopartikel: Gold, Kohlenstoffnanoröhren, Silber, Legierung aus Antimon- und Zinnoxid, Legierung aus Aluminium- und Zinkoxid, Legierung aus Indium- und Zinnoxid, Legierung aus Gallium- und Zinkoxid: 10-30 %,
- magnetische Nanopartikel oder Magnetit-Nanopartikel: 5-30 %,
- Silberionen: 10-30 %,
- Benzotriazol: 0,05-0,2 %,
- HALS (Hindered Amine Light Stabilizers): 0,05-0,2 %,
- Phenolphosphit; Ethylen-Bis[3,3-bis(3-tert-butyl-4-hydroxyphenyl) Butyrat]; Pentaerythritol-Tetrakis-(3-(3,5-di-tert-butyl-4-hydroxyphenyl)-Propionat): 0-1,5 %,
- Triphenylphosphat: 0-15 %,
- abgeblättertes Montmorillonit: 0-15 %,
- Ton-Nanoröhren: 0-15 %,
- Silikonacrylat: von 0,5-2 %,
- Anthrachinone: 0-50 %,
- Azoverbindungen: 0-50 %,
- Pigmente: 0-50 %,
- Beimischungen mit kontrollierter Aussalzung: eingebaut in die Formulierung, wobei die Beimischungen in dem Verwendungsmilieu allmählich freigesetzt werden: 0-50 %,
- Reparaturwirkstoff-Mikrokapseln, die aus einer polymerisierbaren Flüssigkeit der gleichen Art wie die betreffende Zusammensetzung gebildet sind, wobei ihr Anteil dann in dem gesamten Anteil berücksichtigt ist: 0-50 %.

3. Verfahren zum Formen einer Uhrenkomponente (1) nach Anspruch 1, **dadurch gekennzeichnet, dass** das erste Material (5) aus einem Zusammensetzungstyp (CT) gewählt wird, in dem das erste Material (5) bezüglich der Gesamtheit Folgendes enthält:
- Trimethylolpropan-Tri(methacrylat): 78,0 %,
- Pentaerythrityl-Tetraacrylat: 19,5 %,
- Bis(4-tert-butylcyclohexyl) Peroxydicarbonat: 0,5 %,
- 1-Benzoylcyclohexanol: 2,0 %,
als das erste polymerisierbare Gießmaterial (5) für die Herstellung der Komponente (1).

4. Verfahren zum Formen einer Uhrenkomponente (1) nach einem der Ansprüche 1 bis 3, **dadurch gekennzeichnet, dass** das in den Hohlraum (17) eingespritzte erste Material (5) während seiner Polymerisation für 10 bis 20 Sekunden mit einer Temperatur im Bereich von 100 °C bis 120 °C beaufschlagt wird.

5. Verfahren zum Formen einer Uhrenkomponente (1) nach einem der vorhergehenden Ansprüche, **dadurch gekennzeichnet, dass** nach dem Einspritzen des ersten Gießmaterials (5) die Komponente (1) mit Ultraviolettstrahlung entweder durch die Platte (6), die in Form einer für Ultraviolettstrahlen durchlässigen Platte hergestellt ist, oder nach der Entnahme der polymerisierten Komponente (1) aus dem Hohlraum (17) bestrahlt wird, um eine verbesserte Härte der starren Komponente (1) zu erhalten.

6. Verfahren zum Formen einer Uhrenkomponente (1) nach dem vorhergehenden Anspruch, **dadurch gekennzeichnet, dass** das zweite für Ultraviolettstrahlen durchlässige Gießmaterial (8) in der Weise gewählt wird, dass eine für Ultraviolettstrahlen durchlässige, nachgiebige Hohlgießform (9) erhalten wird, und dass die für Ultraviolettstrahlen durchlässige Trägerplatte (15) in einer Weise gewählt wird, dass zusätzlich zu der Bestrahlung durch die durchlässige Platte (6) des in den Hohlraum (17) eingespritzten ersten Materials (5) die Komponente (1) mit Ultraviolettstrahlung durch die Trägerplatte (15) und die nachgiebige Hohlgießform (9) bestrahlt wird, um eine verbesserte Härte der starren Komponente (1) zu erhalten.

7. Verfahren zum Formen einer Uhrenkomponente (1) nach einem der vorhergehenden Ansprüche, **dadurch gekennzeichnet, dass** auf die Platte (6) und auf die Abstützplatte (15) während des Einspritzens des ersten Gießmaterials (5) in den Hohlraum (17) und während der Polymerisation des ersten Gießmaterials (5) eine Klemmkraft ausgeübt wird, um die Komponente (1) herzustellen.

8. Verfahren zum Formen einer Uhrenkomponente (1) nach einem der vorhergehenden Ansprüche, **dadurch gekennzeichnet, dass** die Komponente (1) mit einer ebenen oberen Oberfläche (2) hergestellt wird und dass die Platte (6) zumindest mit ihrer Kontaktoberfläche (7) eben hergestellt wird und dass die nachgiebige Hohlgießform (9) mit ihrer Kante (11) hergestellt wird, die eine erste ebene Abstützoberfläche (12) aufweist.

9. Verfahren zum Formen einer Uhrenkomponente (1) nach einem der vorhergehenden Ansprüche, **dadurch gekennzeichnet, dass** in den Hohlraum (17) entweder vor dem Einspritzen des ersten Gießmaterials (5) oder während oder nach dieser Einspritzung Kugeln (18) eingesetzt werden, die jeweils einen elektrisch aufladbaren und/oder magnetisierbaren und/oder elektrisch geladenen und/oder magnetisierten Kern enthalten, wobei das elektrische Aufladen oder das Magnetisieren vor oder nach dem Einspritzen erfolgen.

10. Anwendung des Verfahrens nach einem der vorhergehenden Ansprüche auf die Fertigung einer Uhrenkomponente (1), die gewählt ist aus: Uhrenglas, Krone, Gehäusemittelteil, Platine, Brücke, Rad, Hemmungsrad, Anker, oszillierende Masse, Lageraufnahme, Stoßdämpfer.

## Claims

1. Method for forming a transparent, one-piece, single layer timepiece component (1) including a top surface (2) and a bottom surface (3) connected by an edge (4), said edge (4) extending in the thickness of said component (1), **characterized in that**:
- a first transparent, polymerisable moulding material (5) is selected for making said component (1), said first material (5) including, as a proportion of the total:
∘ a mixture of trimethylolpropane tri (methacrylate) and pentaerythrityl tetraacrylate: 50-97.5%
∘ bis (4-tert-butylcyclohexyl) peroxydicarbonate: 0.5-1.5%
∘ 1-benzoylcyclohexanol: 0.7-2.3%
∘ at least one additive 0-50%;
- polymethylsiloxane is selected as the second moulding material (8), to make a flexible mould for moulding said first moulding material (5) and to allow the removal thereof from the mould;
- a plate (6) is made having a contact surface (7) which is the negative of said top surface (2);
- a flexible female mould (9) is made in said second moulding material (8), said female mould (9) including:
- a first contact surface (10) forming a female mould of said bottom surface (3);
- around said first contact surface (10), an edge (11) including a first bearing surface (12) arranged to cooperate in a complementary manner with said contact surface (7) of said plate (6);
- and a second bearing surface (13) opposite said first surface (10);
- an injection and degassing capillary network (14) is made in said female mould (9);
- said second bearing surface (13) of said female mould (9) is applied to a support plate (15);
- at a distance from said first surface (10) corresponding to the thickness required for said component (1), and exactly positioned in relation to said first surface (10), said plate (6) is positioned with said contact surface (7) thereof facing said first contact surface (10) of said female mould (9), with said first bearing surface (12) in sealed contact with said contact surface (7) of said plate (6);
- said first moulding material (5) is injected through said injection capillary network (14), so as to completely fill with said first moulding material (5) a cavity (17) delimited by said contact surface (7) of said plate (6), said first contact surface (10) of said female mould (9) and said edge (11) in sealed abutment via the said first bearing surface (12) thereof on said contact surface (7);
- said first material (5) injected into said cavity (17) is left to polymerise until a said rigid component (1) is obtained;
- said plate (6) and said support plate (15) are moved away;
- said component (1) is removed from said flexible female mould (9) by the deformation of said mould.

2. Method for forming a timepiece component (1) according to claim 1, **characterized in that** for said at least one additive, there is chosen at least one of the products listed below, in the proportion indicated, as a percentage of the total of said first material:
- Copolymer polyamide-polyether: 10-15%
- Ethylenic ionomer resin: 10-30%
- Trineoalkoxy Zirconate: 10-30%
- Conductive nanoparticles: gold, carbon nanotubes, silver, antimony tin oxide alloy, zinc aluminium oxide alloy, indium tin oxide alloy, zinc gallium oxide alloy: 10-30%
- Magnetic nanoparticles or magnetite: 5-30%
- Silver ions: 10-30%
- Benzotriazole: 0.05-0.2%
- HALS (Hindered Amine Light Stabilizers): 0.05-0.2%
- Phenolic phosphite; ethylene bis [3,3-bis (3-tert-butyl-4-hydroxyphenyl) butyrate]; pentaerythritol tetrakis (3-(3,5-di-tert-butyl-4-hydroxyphenyl) propionate): 0-1.5%
- Triphenyl phosphate 0-15%
- Exfoliated montmorillonite: 0-15%
- Clay nanotubes: 0-15%
- Silicone acrylate: from 0.5-2%
- Anthraquinones: 0-50%
- Azoics: 0-50%
- Pigments: 0-50%
- Adjuvants for controlled delivery: incorporated in the formulation, said adjuvants are gradually released into the operating environment: 0-50%
- Microcapsules of repair agent, formed of polymerisable liquid of the same nature as the composition concerned, the proportion then being integrated in the total proportion: 0-50%

3. Method of forming a timepiece component (1) according to claim 1, **characterized in that** said first material (5) is selected to be formed of a model composition (CT) wherein said first material (5) includes, as a proportion of the total:
- trimethylolpropane tri (methacrylate): 78.0 %
- pentaerythrityl tetraacrylate: 19.5%
- bis (4-tert-butylcyclohexyl) peroxydicarbonate: 0.5%
- 1-benzoylcyclohexanol: 2.0%;
as said first polymerisable moulding material (5) for making said component (1).

4. Method for forming a timepiece component (1) according to any of claims 1 to 3, **characterized in that** said first material (5), injected into said cavity (17), is subjected during polymerisation to a temperature comprised between 100°C and 120°C for 10 to 20 seconds.

5. Method for forming a timepiece component (1) according to any of preceding claims, **characterized in that**, after injection of said first moulding material (5), said component (1) is exposed to UV radiation, either through said plate (6) made in the form of a UV transparent plate, or after the removal of said polymerised component (1) from said cavity (17), to obtain improved hardness of said rigid component (1).

6. Method for forming a timepiece component (1) according to the preceding claim, **characterized in that** said second moulding material (8) is selected to be UV transparent so as to obtain a said flexible female mould (9) which is UV transparent, and said support plate (15) is selected to be UV transparent, so as to expose said component (1) to UV radiation, in addition to the exposition through said transparent plate (6), said first material (5) injected into said cavity (17), through said support plate (15) and said flexible female mould (9), to obtain improved hardness of said rigid component (1).

7. Method for forming a timepiece component (1) according to any of preceding claims, **characterized in that** a tightening force is applied to said plate (6) and to said support plate (15) during the injection of said first moulding material (5) into said cavity (17), and during polymerisation of said first moulding material (5) to form said component (1).

8. Method for forming a timepiece component (1) according to any of preceding claims, **characterized in that** said component (1) is made with said top surface (2) plane, and **in that** said plate (6) is made with at least said contact surface (7) thereof plane, and **in that** said flexible female mould (9) is made with said edge (11) thereof having a first plane bearing surface (12).

9. Method for forming a timepiece component (1) according to any of preceding claims, **characterized in that** there is inserted into said cavity (17), either prior to injection of the first moulding material (5), or during or after said injection, nodules (18) each including an electrifiable and/or magnetisable and/or electrified and/or magnetised core, the electrification or magnetisation being prior or subsequent to said injection.

10. Application of the method according to any of preceding claims to the making of a timepiece component (1) selected from among: a crystal, crown, middle part of the case, plate, bridge, escape wheel, pallets, oscillating weight, bearing housing, shock absorber.
